# EUROPÄISCHE PATENTANMELDUNG

(11) **EP 2 017 954 A2**
(43) Veröffentlichungstag der Anmeldung: **21.01.2009**
(21) Anmeldenummer: 08104591.6
(22) Anmeldetag: 01.07.2008
(51) Int. Cl.: H02P 25/14

(54) **Verfahren zum Betreiben eines Universalmotors und Hausgerät zur Pflege von Wäschestücken**

(30) Priorität: 18.07.2007 DE 102007033491
(71) Anmelder: BSH Bosch und Siemens Hausgeräte GmbH, 81739 München (DE)
(72) Erfinder: Albayrak, Hasan Gökcer, 13469 Berlin (DE); Jahnke, Heiko, 13156 Berlin (DE); Skrippek, Jörg, 14641 Wustermark OT Priort (DE)

(57) **Zusammenfassung**

Die Erfindung betrifft ein Verfahren zum Betreiben eines Universalmotors zum Antreiben einer Trommel eines Hausgeräts zur Pflege von Wäschestücken mittels eines Halbleiterstellers, mit welchem eine Netzwechselspannung geschaltet und der Universalmotor gesteuert wird, wobei abhängig von dem momentanen Lastverhalten der induktiven Last der Zündwinkel des Halbleiterstellers variabel bestimmt wird. Die Erfindung betrifft auch ein Hausgerät zur Pflege von Wäschestücken mit einer Zündschaltung für einen schaltbaren Halbleitersteller, welcher zum Schalten einer Netzwechselspannung und zum Steuern eines Universalmotors zum Antreiben einer Trommel des Hausgeräts.

## Beschreibung

Die Erfindung betrifft ein Verfahren zum Betreiben eines Universalmotors, zum Antreiben einer Trommel eines Hausgeräts zur Pflege von Wäschestücken, insbesondere eine Waschmaschine oder ein Wäschetrockner, mittels eines Halbleiterstellers, mit welchem eine Netzwechselspannung geschaltet und der Universalmotor gesteuert wird. Des Weiteren betrifft die Erfindung ein Hausgerät zur Pflege von Wäschestücken, insbesondere eine Waschmaschine oder ein Wäschetrockner, mit einer Zündschaltung für einen schaltbaren Halbleitersteller, welcher zum Schalten einer Netzwechselspannung und zum Steuern eines Universalmotors, welcher eine Trommel des Hausgeräts antreibt, ausgebildet ist.

Manche Hausgeräte zur Pflege von Wäschestücken, wie Waschmaschinen oder Wäschetrockner oder Waschtrockner, weisen eine mittels eines Motors angetriebene Trommel auf, in der die Wäschestücke beim Reinigungsprozess enthalten sind. Derartige Antriebsmotoren für diese Trommeln stellen induktive Lasten dar, welche durch einen Halbleitersteller, beispielsweise einen Triac, angesteuert werden können. Die Steuerelektronik für den Halbleitersteller kann des Weiteren einen Mikroprozessor als Rechnereinheit aufweisen, wobei dieser Mikroprozessor auch zur Steuerung weiterer Funktionen des Hausgeräts vorgesehen sein kann. Für die Energieversorgung der Steuerelektronik ist ein Netzteil vorgesehen.

Die Regelung dieser induktiven Last kann durch eine Phasenanschnittssteuerung des Halbleiterstellers erfolgen. Insbesondere wird dabei die Drehzahl des Motors geregelt. Der Zündzeitpunkt und somit der Zündwinkel des Halbleiterstellers ist auf die Phasenlage der Netzspannung bezogen. Wegen der bei induktiven Lasten auftretenden Phasenverschiebung zwischen dem Strom und der Spannung wird der gezündete Halbleitersteller durch den Nulldurchgang des nachgeschalteten bzw. phasenverschobenen Stroms wieder gelöscht.

Aus der DE 197 19 786 A1 ist eine Zündschaltung eines Triacs bekannt. Ebenso ist aus der US 5,200,684 ein Antriebssystem für einen Wäschetrockner oder eine Waschmaschine mit einer drehbaren Trommel bekannt, wobei der induktive Motor über einen durch einen Mikroprozessor angesteuerten Triac geschaltet wird.

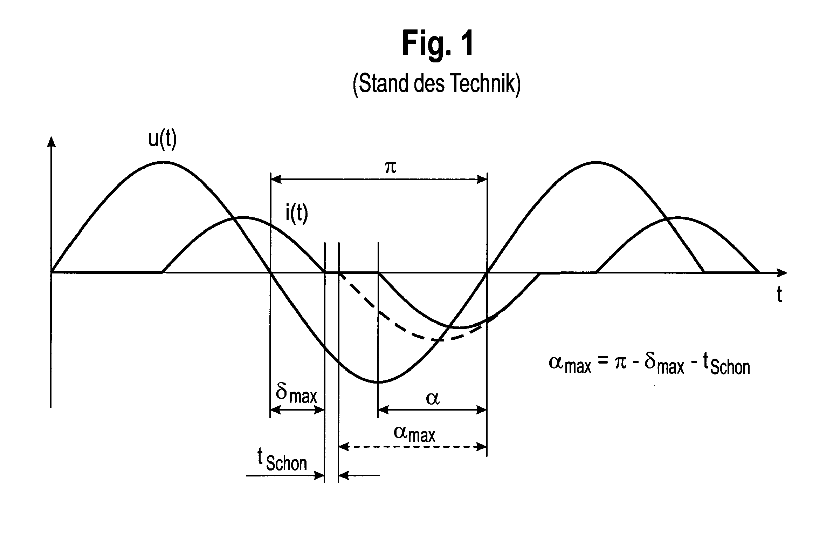

Des Weiteren ist in der Darstellung gemäß Fig. 1 eine bekannte Lösung zur Schaltung eines Triacs dargestellt. Bei dieser Ausgestaltung wird ein maximal zulässiger Zündwinkel αₘₐₓ pauschal vordefiniert, der durch eine Worst-Case-Betrachtung des entsprechenden Verbrauchers ermittelt wird und durch die maximale Phasenverschiebung δₘₐₓ zwischen der Netzwechselspannung u(t) und dem nacheilenden Strom i(t) gekennzeichnet ist. Dies ist auch in Fig. 1 dargestellt. Die Schonzeit t_{schon} stellt dabei eine Zeitdauer dar, welche das Erreichen der Sperrfähigkeit des Halbleiterstellers charakterisiert. Diese gemäß der Darstellung in Fig. 1 pauschale Vorgabe eines maximal zulässigen Zündwinkels αₘₐₓ hat zur Folge, dass bei Lastfällen mit Phasenverschiebungen δₘₐₓ der Zündwinkel α nicht größer als der maximale Zündwinkel αₘₐₓ gewählt werden kann, was zur Einschränkung des möglichen Spannungsstellbereichs führt. Weiterhin kann bei zu klein dimensionierter maximaler Phasenverschiebung δₘₐₓ durch das lastabhängige, sporadische Auftreten einer Phasenverschiebung δ größer δₘₐₓ und gleichzeitiger Anforderung eines Zündwinkels α gleich dem pauschal vorgegebenen maximal zulässigen Zündwinkel αₘₐₓ, die Zündung komplett ausfallen, da zu diesem Zeitpunkt der Halbleitersteller seine Sperrfähigkeit noch nicht wieder erreicht hat.

Es ist Aufgabe der vorliegenden Erfindung, ein Verfahren zum Betreiben eines Universalmotors mittels eines Halbleiterstellers sowie ein Hausgerät zur Pflege von Wäschestücken mit einer Zündschaltung für einen schaltbaren Halbleitersteller zu schaffen, bei dem der Zündausfall verhindert werden kann.

Diese Aufgabe wird durch ein Verfahren, welches die Merkmale nach Anspruch 1 aufweist, und eine Zündschaltung, welche die Merkmale nach Anspruch 12 aufweist, gelöst.

Bei einem erfindungsgemäßen Verfahren zum Betreiben eines Universalmotors mittels eines Halbleiterstellers wird mit dem Halbleitersteller eine Netzwechselspannung geschaltet und der Universalmotor, welcher nachfolgend auch einfach nur als induktive Last bezeichnet wird, gesteuert. Abhängig von dem momentanen Lastverhalten der induktiven Last wird der Zündwinkel des Halbleiterstellers variabel bestimmt.

Indem nicht mehr ein fest vorgegebener, pauschal bestimmter Zündwinkel zugrunde gelegt wird, sondern dieser quasi situationsabhängig von dem momentanen Betriebszustand der induktiven Last bestimmt wird, kann der Ausfall von Zündimpulsen verhindert werden.

Bevorzugt wird abhängig von dem momentanen Lastverhalten der induktiven Last der momentan größtmögliche Zündwinkel bestimmt. Durch die situationsabhängige Möglichkeit der vollen Ausnützung des maximal möglichen Zündwinkels können weitere Betriebszustände der induktiven Last schnellstmöglich erreicht werden.

Insbesondere dann, wenn die induktive Last ein Motor ist, kann der von dem momentanen Lastverhalten abhängige größtmögliche Zündwinkel eine maximale Beschleunigung und höchstmögliche Enddrehzahlen gewährleisten.

Der Universalmotor dient vorzugsweise zum Antreiben einer Trommel eines Hausgeräts zur Pflege von Wäschestücken, beispielsweise einer Waschmaschine, einem Wäschetrockner oder einem Waschtrockner. Das Lastverhalten des Universalmotors wird insbesondere durch die Drehzahl des Motors charakterisiert.

Gerade bei einer derartigen spezifischen Ausgestaltung ist das Verfahren auch unabhängig von der Netzfrequenz (50/60 Hz) und von Frequenzschwankungen. Insbesondere bei relativ hohen Drehzahlen des Motors, bei denen die Phasendifferenz zwischen der Netzspannung und dem Strom klein ist, kann durch das erfindungsgemäße Verfahren mehr Motorspannung angeboten werden.

Bei Waschgeräten im Schleuderbetrieb kann mit dem erfindungsgemäßen Verfahren ein schnellerer Durchgang durch die Resonanzfrequenzen des Schwingsystems ermöglicht werden, was zu einem besseren Standverhalten und höherer Lebensdauer des Geräts führt. Durch die Vermeidung von Zündimpulsausfällen kann auch die negative Beeinflussung der Drehzahlregelung, welche bei derartigen Zündimpulsausfällen auftreten kann, vermieden werden.

Vorzugsweise werden zum Bestimmen des Zündwinkels die Zeitpunkte des Nulldurchgangs des Stromsignals und des Nulldurchgangs des Spannungssignals für jede Halbwelle der Signale erkannt und daraus wird eine vom momentanen Lastverhalten der induktiven Last abhängige Phasendifferenz zwischen den Signalen bestimmt, und abhängig von dieser Phasendifferenz der momentane Zündwinkel ermittelt.

Vorzugsweise wird ein maximal zulässiger Zündwinkel abhängig von der Phasendifferenz und einer Schonzeit zum Erreichen der Sperrfähigkeit des Halbleiterstellers, welche Schonzeit mit dem Nulldurchgang des Stromsignals beginnt, bestimmt.

Der maximale Zündwinkel wird vorzugsweise normiert.

Bevorzugt wird durch eine Zündschaltung, welche von einem Hausgerät zur Pflege von Wäschestücken umfasst ist und welche einen Halbleitersteller schaltet, der zum Schalten einer Netzwechselspannung und zum Steuern des Universalmotors zum Antreiben einer Trommel des Hausgeräts ausgebildet ist, eine Signalhalbwellenbeschaltung erzeugt, durch welche ein Netzsynchronisationssignal erzeugt wird, das zum Zeitpunkt des Nulldurchgangs des Netzspannungssignals einen steilen Flankenwechsel aufweist.

Das Netzsynchronisationssignal wird vorzugsweise an einem Eingang einer Rechnereinheit der Zündschaltung, insbesondere ein Mikroprozessor, angelegt und bei einem Flankenwechsel des Netzsynchronisationssignals wird die Zeitmessung für die Phasendifferenz mit der Rechnereinheit gestartet.

Durch die Signalhauptwellenbeschaltung wird vorzugsweise der Nulldurchgang des Stromsignals erfasst und beim Nulldurchgang der Signalhalbwelle des Stromsignals wird die Zeitmessung für die Phasendifferenz gestoppt.

Der Zündwinkel wird vorzugsweise bei einer momentanen Signalhalbwelle auf den maximalen Zündwinkel bei der vorhergehenden Signalhalbwelle begrenzt.

Es kann auch vorgesehen sein, dass der Zündwinkel bei einer momentanen Signalhalbwelle auf den maximalen Zündwinkel bei dieser Signalhalbwelle begrenzt wird.

Bei einem erfindungsgemäßen Hausgerät zur Pflege von Wäschestücken mit einer Zündschaltung für einen schaltbaren Halbleitersteller ist die Zündschaltung zum Schalten einer Netzwechselspannung und zum Steuern eines Universalmotors, welcher eine induktiven Last darstellt, ausgebildet. Die Zündschaltung ist so ausgebildet, dass abhängig von dem momentanen Lastverhalten der induktiven Last der Zündwinkel des Halbleiterstellers variabel bestimmbar ist.

Vorzugsweise ist abhängig von dem momentanen Lastverhalten der induktiven Last der momentan größtmögliche Zündwinkel bestimmbar.

Zur Bestimmung des momentanen Lastverhaltens der induktiven Last können vorzugsweise die Zeitpunkte für den Stromnulldurchgang und den Spannungsnulldurchgang für jede Netzhalbwelle des Laststrom und der Lastspannung ermittelt werden. Die Ermittlung der Zeitpunkte kann bevorzugt auch in Abhängigkeit von der momentanen Drehzahl des Universalmotors erfolgen. Daher umfasst das Hausgerät Einrichtungen zur Ermittlung der Zeitpunkte für den Stromnulldurchgang und den Spannungsnulldurchgang und ggf. zusätzlich einer Drehzahlerfassungseinrichtung.

Der Halbleitersteller ist bevorzugterweise als Triac ausgebildet. Der Universalmotor dient zum Antreiben einer Trommel eines Hausgeräts zur Pflege von Wäschestücken, wobei das Lastverhalten dieses Universalmotors durch die Drehzahl des Universalmotors gegeben ist.

Vorteilhafte Ausgestaltungen des erfindungsgemäßen Verfahrens sind als vorteilhafte Ausgestaltungen der erfindungsgemäßen Zündschaltung anzusehen.

Ein Ausführungsbeispiel der Erfindung wird nachfolgend anhand einer schematischen Zeichnung näher erläutert. Es zeigen:
- Fig. 1: ein Diagramm, bei dem die Signalverläufe der Spannung und des Stroms dargestellt sind und der fest vorgegebene Zündwinkel gemäß der Vorgehensweise im Stand der Technik dargestellt ist; und
- Fig. 2: ein Diagramm, bei dem die Spannung und der Stromverlauf gezeigt sind und Zündwinkel des Halbleiterstellers dargestellt sind, wie sie nach der Erfindung bestimmt werden.

In den Figuren werden gleiche oder funktionsgleiche Elemente mit den gleichen Bezugszeichen versehen.

Im Ausführungsbeispiel weist ein Hausgerät zur Pflege von Wäschestücken, beispielsweise eine Waschmaschine oder ein Wäschetrockner, eine Trommel zur Aufnahme von Wäschestücken auf. Die zylinderförmige Trommel kann um eine Längsachse gedreht werden, wobei dazu ein Universalmotor vorgesehen ist. Dieser Universalmotor stellt eine induktive Last dar, welche über einen Halbleitersteller, im Ausführungsbeispiel einen Triac, an einem Energienetz liegt. Der Halbleitersteller ist einer Zündschaltung zugeordnet, welche darüber hinaus auch eine als Mikroprozessor ausgebildete Rechnereinheit aufweist. Der Halbleitersteller ist durch die Rechnereinheit ansteuerbar. Mit der Rechnereinheit können Zündimpulse für den Halbleitersteller zur Drehzahlsteuerung oder Drehzahlregelung des Universalmotors durch eine Phasenanschnittsteuerung erfolgen.

Zur Vermeidung einer negativen Beeinflussung der Drehzahlregelung ist es erforderlich, dass der Ausfall von Zündimpulsen des Halbleiterstellers verhindert wird. Dazu wird ein Zündwinkel des Halbleiterstellers nicht pauschal bestimmt und vorgegeben, sondern abhängig von dem momentanen Lastverhalten des Universalmotors wird der Zündwinkel des Halbleiterstellers individuell und situationsabhängig bestimmt. Bei jedem spezifischen Lastverhalten der induktiven Last ist somit ein anderer Zündwinkel gegeben. Insbesondere wird abhängig von dem momentanen Lastverhalten des Universalmotors der momentan jeweils größtmögliche Zündwinkel bestimmt. Durch die volle Ausnützung des maximal möglichen momentanen Zündwinkels können maximale Beschleunigungen und höchstmögliche Enddrehzahlen des Universalmotors ermöglicht werden. Darüber hinaus kann gerade bei hohen Drehzahlen, bei denen die Phasendifferenz zwischen Strom und Spannung klein ist, mehr Motorspannung angeboten werden.

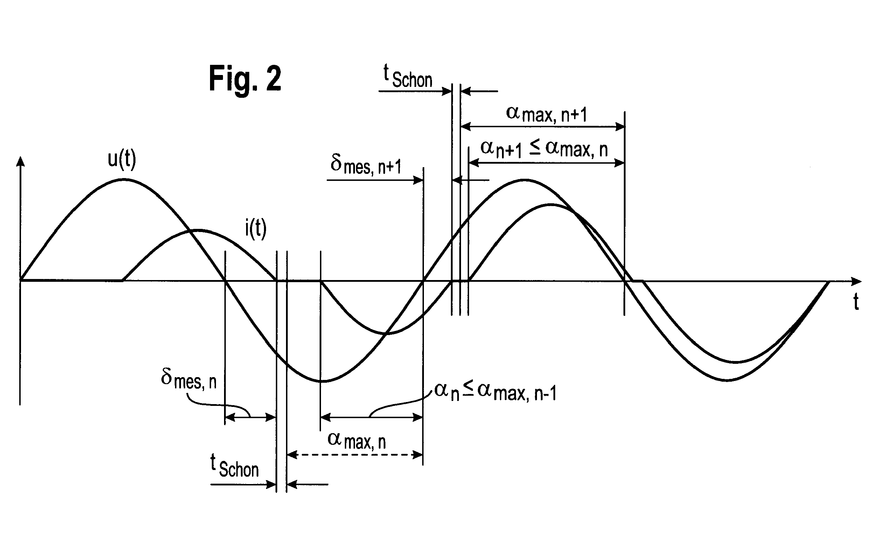

Zur Bestimmung des momentan jeweils größtmöglichen Zündwinkels in Abhängigkeit von der momentanen Drehzahl des Universalmotors werden die Zeitpunkte für den Stromnulldurchgang und den Spannungsnulldurchgang für jede Netzhalbwelle der Signale erkannt. In Fig. 2 ist der Signalverlauf der Spannung u(t) und des Stroms i(t) gezeigt. Die Phasendifferenz δₘₑₛ,ₙ zwischen der ersten positiven Halbwelle der Spannung u(t) und der ersten positiven Halbwelle des Stroms i(t) ist in Fig. 2 dargestellt. Diese Phasendifferenz δₘₑₛ,ₙ zwischen den ersten positiven Signalhalbwellen wird als Zeitdifferenz zwischen den Nulldurchgängen dieser Signalhalbwellen bestimmt. Diese Phasendifferenz δₘₑₛ,ₙ wird im Ausführungsbeispiel auf 100 % Zündwinkel normiert, so dass sich jeweils ein maximal zulässiger Zündwinkel αₘₐₓ = 100 % - δₘₑₛ, - t_{schon}, ergibt. Die Schonzeit t_{schon} stellt die Zeit dar, welche erforderlich ist, um die Sperrfähigkeit des Halbleiterstellers nach dem Nulldurchgang des Stromsignals i(t) erreichen zu können.

Die aktuelle Stellgröße der Drehzahlregelung bestimmt abhängig von der Regeldynamik den geforderten Zündwinkel αₙ. Dieser kann auf den maximalen Zündwinkel αₘₐₓ,ₙ₋₁ der vorhergehenden Signalhalbwelle begrenzt werden. Dies ist in Fig. 2 durch die Zeitdauer mit der zugeordneten Beziehung αₙ kleiner = α_{max,n-1} gezeigt.

Es kann jedoch auch vorgesehen sein, dass der momentane Zündwinkel αₙ bei einer momentanen Signalhalbwelle n auf den maximalen Zündwinkel α_{max,n} dieser Signalhalbwelle n begrenzt wird. Dies ist jedoch bei Motoren als induktive Last aufgrund der geringen Änderung der Phasenverschiebung innerhalb einer Netzhalbwelle nicht erforderlich.

In Fig. 2 sind des Weiteren dann auch die Phasenverschiebungen δ_{mes,n+1} zwischen der ersten negativen Halbwelle der Spannung u(t) und der ersten negativen Halbwelle des Stroms i(t) dargestellt. Darüber hinaus sind auch wiederum die zwei Möglichkeiten im Hinblick auf die Begrenzung des Zündwinkels αₙ + 1 dargestellt, welche entweder durch den maximalen Zündwinkel α_{max,n} der vorhergehenden Netzhalbwelle oder durch den maximalen Zündwinkel α_{max,n+1} dieser Signalhalbwelle n + 1 erfolgen kann.

Durch eine geeignete Signalhalbwellenbeschaltung der Zündschaltung wird ein Netzsynchronisationssignal erzeugt, das zum Zeitpunkt des Nulldurchgangs der Netzspannung u(t) einen steilen Flankenwechsel aufweist. Das Netzsynchronisationssignal wird direkt auf einen Pin der Rechnereinheit geschaltet und beim Flankenwechsel wird die Zeitmessung für die Phasendifferenz δₘₑₛ gestartet.

Darüber hinaus wird durch eine geeignete Signalhalbwellenbeschaltung der Zeitpunkt, an dem der Motorstrom erstmalig Null wird, und somit der Signalverlauf des Stroms einen Nulldurchgang aufweist, erkannt und die Zeitmessung für die Phasendifferenz δₘₑₛ wieder gestoppt. Dazu kann die Spannung über einen Messshunt in der Motorzuleitung zu einem A/D-Kanal der Rechnereinheit geführt werden und bei ausreichender A/D-Auflösung, Samplingrate und entsprechendem Strommessbereich der Zeitpunkt, an dem der Signalverlauf des Stroms i(t) einen Nulldurchgang aufweist, hinreichend klein aufgelöst werden. Eine weitere Möglichkeit besteht darin, komplett durch eine Signalhalbwellenbeschaltung der Rechnereinheit ein binäres Motorstromzustandssignal zur Verfügung zu stellen, welches beim Wechsel vom Motorstrombereich Null auf einen Wert größer oder kleiner Null einen Zustandswechsel auflöst.

Durch die Erfindung kann sichergestellt werden, dass der Zündwinkel α eines einschaltbaren Halbleiterstellers, beispielsweise eines Triacs, welcher eine Wechselspannung schaltet und durch den Nulldurchgang des geschalteten Stroms wieder gelöscht wird, abhängig von Lastverhalten des Verbrauchers, beispielsweise eines Universalmotors, größtmöglich gewählt werden kann, um den dynamischen Regelanforderungen zu genügen. Es soll unmittelbar nach dem Nulldurchgang des Stromsignals und Verstreichen einer geringen Schonzeit t_{schon} zum Erreichen der Sperrfähigkeit des Halbleiterstellers wieder gezündet werden können.

## Patentansprüche

1. Verfahren zum Betreiben eines Universalmotors zum Antreiben einer Trommel eines Hausgeräts zur Pflege von Wäschestücken, insbesondere eine Waschmaschine oder ein Wäschetrockner, mittels eines Halbleiterstellers, mit welchem eine Netzwechselspannung geschaltet und der Universalmotor gesteuert wird, **dadurch gekennzeichnet, dass** abhängig von dem momentanen Lastverhalten des Universalmotors der Zündwinkel des Halbleiterstellers variabel bestimmt wird.

2. Verfahren nach Anspruch 1, **dadurch gekennzeichnet, dass** abhängig von dem momentanen Lastverhalten des Universalmotors der momentan größtmögliche Zündwinkel bestimmt wird.

3. Verfahren nach Anspruch 1 oder 2, **dadurch gekennzeichnet, dass** zum Bestimmen des Zündwinkels die Zeitpunkte des Nulldurchgangs des Stromsignals und des Nulldurchgangs des Spannungssignals für jede Halbwelle der Signale erkannt werden und daraus eine vom momentanen Lastverhalten des Universalmotors abhängige Phasendifferenz zwischen den Signalen und abhängig davon der Zündwinkel bestimmt wird.

4. Verfahren nach Anspruch 3, **dadurch gekennzeichnet, dass** ein maximal zulässiger Zündwinkel abhängig von der Phasendifferenz und einer Schonzeit zum Erreichen der Sperrfähigkeit des Halbleiterstellers, welche Schonzeit mit dem Nulldurchgang des Stromsignals beginnt, bestimmt wird.

5. Verfahren nach Anspruch 3 oder 4, **dadurch gekennzeichnet, dass** der maximale Zündwinkel normiert wird.

6. Verfahren nach einem der Ansprüche 3 bis 5, **dadurch gekennzeichnet, dass** durch eine Zündschaltung eine Signalhalbwellenbeschaltung erzeugt wird, durch welche ein Netzsynchronisationssignal erzeugt wird, das zum Zeitpunkt des Nulldurchgangs des Netzspannungssignals einen steilen Flankenwechsel aufweist.

7. Verfahren nach Anspruch 6, **dadurch gekennzeichnet, dass** das Netzsynchronisationssignal an einem Eingang einer Rechnereinheit der Zündschaltung angelegt wird und bei einem Flankenwechsel die Zeitmessung mit der Rechnereinheit für die Phasendifferenz gestartet wird.

8. Verfahren nach Anspruch 6 oder 7**, dadurch gekennzeichnet, dass** durch die Signalhalbwellenbeschaltung der Nulldurchgang des Stromsignals erfasst wird und beim Nulldurchgang der Signalhalbwelle des Stromsignals die Zeitmessung für die Phasendifferenz gestoppt wird.

9. Verfahren nach einem der vorhergehenden Ansprüche, **dadurch gekennzeichnet, dass** der Zündwinkel bei einer momentanen Signalhalbwelle auf den maximalen Zündwinkel bei der vorhergehenden Signalhalbwelle begrenzt wird.

10. Verfahren nach einem der Ansprüche 1 bis 8, **dadurch gekennzeichnet, dass** der Zündwinkel bei einer momentanen Signalhalbwelle auf den maximalen Zündwinkel bei dieser Signalhalbwelle begrenzt wird.

11. Verfahren nach einem der vorhergehenden Ansprüche, **dadurch gekennzeichnet, dass** das Lastverhalten durch die Drehzahl des Universalmotors gegeben ist.

12. Hausgerät zur Pflege von Wäschestücken, insbesondere eine Waschmaschine oder ein Wäschetrockner mit einer Zündschaltung für einen schaltbaren Halbleitersteller, welcher zum Schalten einer Netzwechselspannung und zum Steuern eines Universalmotors zum Antreiben einer Trommel des Hausgeräts ausgebildet ist, **dadurch gekennzeichnet, dass** eine Einrichtung zur Bestimmung des momentanen Lastverhaltens des Universalmotors umfasst ist und abhängig von dem momentanen Lastverhalten des Universalmotors der Zündwinkel des Halbleiterstellers variabel bestimmbar ist.

13. Hausgerät nach Anspruch 12, **dadurch gekennzeichnet, dass** abhängig von dem momentanen Lastverhalten des Universalmotors der momentan größtmögliche Zündwinkel bestimmbar ist.
